# EUROPÄISCHE PATENTANMELDUNG

(11) **EP 4 063 545 A2**
(43) Veröffentlichungstag der Anmeldung: **28.09.2022**
(21) Anmeldenummer: 21215384.5
(22) Anmeldetag: 17.12.2021
(51) Int. Cl.: D03D 1/00, D21F 1/00, D03D 15/283, D01F 6/60, D01F 6/62, D01F 6/70, D01F 6/80, D01F 6/84

(54) **INDUSTRIELLES TEXTIL UND VERWENDUNG**

(30) Priorität: 23.03.2021 DE 202021101509 U
(71) Anmelder: Heimbach GmbH, 52353 Düren (DE)
(72) Erfinder: PRASCHAK, Dirk, 41748 Viersen (DE)
(74) Vertreter: Paul & Albrecht Patentanwälte PartG mbB

(57) **Zusammenfassung**

Industrielles Textil (1, 11, 17, 22, 33), insbesondere Papiermaschinenbespannung, Prozess- oder Transportband, das teilweise oder ganz aus wenigstens einem unter Verwendung von 2,5-Furandicarbonsäure hergestellten Bio-Polymer besteht.

## Beschreibung

Die vorliegende Erfindung betrifft ein industrielles Textil, insbesondere eine Papiermaschinenbespannung oder ein Prozess- oder Transportband zum Beispiel für die Lebensmittel- oder Holzindustrie. Darüber hinaus betrifft die Erfindung die Verwendung wenigstens eines unter Verwendung von 2,5-Furandicarbonsäure hergestellten Bio-Polymers.

Industrielle Textilien kommen in verschiedenen industriellen Bereichen zum Einsatz.

Als ein Beispiel für industrielle Textilien seien Prozessbänder, etwa Transportbänder (Fördergurte) genannt. Solche industriellen Bänder kommen in verschiedenen Maschinen zum Einsatz, um Transportgut etwa zu transportieren, zuzuführen, abzulegen und/oder zu stapeln. Derartige Bänder befinden sich im montierten Zustand in Endloskonfiguration, umgreifen beispielsweise eine Rollenbahn einer Maschine. Transportbänder gehen beispielsweise aus der DE 20 2019 103 469 U1 sowie den darin zum Stand der Technik zitierten Dokumenten hervor. Das aus der DE 20 2019 103 469 U1 vorbekannte Transportband weist einen Träger und Beschichtungsstreifen auf, die beispielsweise aus einem wenigstens ein Polymer umfassenden oder daraus bestehenden Beschichtungsmaterial hergestellt sind. Bei dem Träger kann es sich beispielsweise um ein Spiralgliederband oder Gewebe oder Gewirke oder Fadengelege handeln.

Ein weiterer Bereich, in dem industrielle Textilien Verwendung finden, ist der der Papierherstellung. Hier kommen Papiermaschinen zum Einsatz, die mit Papiermaschinenbespannungen ausgestattet sind. Bei solchen, die mitunter auch als Papiermaschinenbänder bezeichnet werden, handelt es sich in der Regel um endlose oder über eine Naht endlos gemachte Textilerzeugnisse großer Länge und großer Breite, die in ihrem Aufbau und in der Materialwahl an die spezifischen Anforderungen in einer Papiermaschine angepasst sind. Die Papiermaschinenbespannungen laufen in der Papiermaschine um und unterstützen dabei die in der Papiermaschine sich bildende Papierbahn beim Durchlauf durch die Papiermaschine und ermöglichen und fördern dabei den Entwässerungsprozess.

Dabei können entsprechend ihrem Einsatzort im Wesentlichen drei Grundtypen von Papiermaschinenbespannungen unterschieden werden, sogenannte Formiersiebe, Pressenfilze und Trockensiebe. Im ersten Teil der Papiermaschine, der Formierpartie, werden üblicherweise ein- oder mehrlagige Gewebe verwendet, auf die die Papierpulpe derart aufgebracht wird, dass sich eine Papierbahn ausbildet. Ihre Entwässerung erfolgt unter Schwerkrafteinfluss und durch Einwirkung von mittels Saugkästen aufgebrachtem Unterdruck durch das Formiersieb. Formiersiebe müssen deshalb einerseits sehr durchlässig sein und andererseits eine gute Faserretention auf deren Außenseite aufweisen. In dem nachfolgenden Abschnitt der Papiermaschine, der Pressenpartie, wird die Papierbahn von Pressenfilzen übernommen und durch Walzenpressen hindurchgeführt, wobei die in der Papierbahn noch enthaltene Flüssigkeit unter Pressendruck herausgepresst und durch den Pressenfilz hindurchgedrückt wird. Pressenfilze weisen üblicherweise einen Träger in Form eines Fadensystems auf, auf das eine oder mehrere Faserschichten aufgebracht, insbesondere aufgenadelt, aufgeklebt, aufgeschweißt oder auch unter Druck und Hitze auflaminiert sind. Das Fadensystem kann beispielsweise ein Gewebe, Gewirke,Fadengelege oder Spiragliederband sein. Bekannt sind auch Kombinationen solcher Fadensysteme. Auf die Pressenpartie folgt die Trockenpartie, in der die Papierbahn auf Trockensiebe übergeben wird, die die Papierbahn über heiße Walzen führt. Die Entwässerung erfolgt hier thermisch. Trockensiebe bestehen in der Regel aus einem offenen Gewebe oder aus einem Gliederband wie Spiralgliederband oder Ringgliederband (zur Gattung: EP 0 171 891 A1, EP 0 472 072 A1 und EP 0 763 623 B1). Daneben gibt es noch weitere Formen von Papiermaschinenbespannungen, beispielsweise sogenannte Schuhpressenbänder, welche aus einem Träger, bestehend z.B. aus einem Gewebe oder einem Fadengelege, und einer darauf aufgebrachten, undurchlässigen Polymerschicht hergestellt sind.

Früher wurden die Fadensysteme solcher Papiermaschinenbänder aus Wolle oder Baumwolle hergestellt. Deren mechanische Eigenschaften waren jedoch so eingeschränkt, dass sie mit der weiteren Entwicklung der Papiermaschinen nicht schritthalten konnten. Seit mehreren Jahrzehnten werden deshalb Papiermaschinenbänder ausschließlich aus Kunststoffen hergestellt, die auf fossilen Rohstoffen basieren, wie Polyethylen, Polypropylen, Polyamid, Polyester, Polyphenylensulfid, Polyetheretherketon und dergleichen. Dabei ist der Mengenverbrauch an solchen Kunststoffen durchaus beachtlich, da Papiermaschinenbespannungen extremer mechanischer, thermischer und/oder chemischer Betriebsbedingungen in der Papiermaschine in der Regel nur eine Lebensdauer von einigen Wochen haben und dann gegen neue Bespannungen ausgetauscht werden müssen.

Die für polymere Kunststoffe für die Herstellung industrieller Textilien verwendeten fossilen Rohstoffe, insbesondere die petrochemischen Rohstoffe wie Mineralöl, gehen zur Neige. Da Mineralöl für die Herstellung von Treibstoffen noch nicht ersetzt werden kann, besteht ein allgemeines Bedürfnis, die Mineralölvorkommen so weit wie möglich zu schonen und denjenigen Anwendungen vorzubehalten, für die sie noch unverzichtbar sind.

Noch wichtiger wird es darüber hinaus sein, den Fokus auf eine Minimierung des ökologischen Fußabdrucks, insbesondere durch Reduzierung des sogenannten "CO₂-Fussabdrucks" zu richten, indem man auf nachwachsende Rohstoffe setzt, die insbesondere aus Pflanzen gewonnen werden. Pflanzen, inklusive der Algen, und manche Bakterien erzeugen im Laufe ihres Daseins über den biochemischen Prozess der Photosynthese - als wichtigsten treibenden Faktor des Sauerstoffkreislaufs der Erdatmosphäre - aus Kohlendioxid (CO₂) molekularen Sauerstoff (O₂).

Daher gehen die Bestrebungen dahin, fossile Rohstoffe durch alternative ökologisch verträglichere Materialien zu ersetzen.

Aus der EP 3 348 679 B1 gehen ein auf nachwachsenden Rohstoffen basierendes Polyethylen-2,5-furandicarboxylat Rohgarn für die Reifenherstellung und ein Reifen mit diesem Garn hervor.

Aus der DE 20 2012 103 846 U1 geht eine Papiermaschinenbespannung hervor, die sich dadurch auszeichnet, dass ein Teil der Fäden oder sämtliche Fäden teilweise oder ganz aus einem Biokunststoff besteht, insbesondere solchen Biokunststoffen, die unter Verwendung von einem oder mehreren nachwachsenden Rohstoffen, insbesondere pflanzlichen Rohstoffen, hergestellt sind. Durch Verwendung solcher Kunststoffe wird ein Beitrag zur Schonung der fossilen Ressourcen geleistet. Außerdem sind Biokunststoffe unproblematischer zu deponieren, und ihr Material lässt sich größtenteils zur erneuten Verwendung wiedergewinnen.

Die vorbekannte Papiermaschinenbespannung mit oder aus einem Biokunststoff hat sich prinzipiell bewährt. Es besteht jedoch weiterhin Bedarf an industriellen Textilien aus alternativen ressourcenschonenden Materialien.

Es ist daher eine Aufgabe der vorliegenden Erfindung, ein industrielles Textil anzugeben, welches sich durch exzellente Produkteigenschaften auszeichnet und das gleichzeitig den Anspruch an dessen nachhaltige Produktion und nachhaltigen Gebrauch unter dem Aspekt eines respektvollen und schonenden Umgangs mit der Umwelt, i. e. mit unserem Lebensraum, erfüllt.

Diese Aufgabe wird gelöst durch ein industrielles Textil, insbesondere eine Papiermaschinenbespannung oder ein Prozess- oder Transportband, das teilweise oder ganz aus wenigstens einem unter Verwendung von 2,5-Furandicarbonsäure hergestellten Bio-Polymer besteht.

Die Anmelderin hat festgestellt, dass auf Basis des Bio-Monomers 2,5-Furandicarbonsäure hochwertige Bio-Polymere erhalten werden können, die ein besonders geeignetes Material für technische Textilien, wie etwa Papiermaschinenbespannungen und Prozess- oder Transportbänder, darstellen, und welche verschiedene Vorteile miteinander verbinden. Bio-Polymere, die auf Basis von 2,5-Furandicarbonsäure erhalten wurden, sind thermoplastisch, zu 100% rezyklierbar und CO2-neutral zu verbrennen.

Einer oder mehrere aus 2,5-Furandicarbonsäure hergestellten Bio-Polymere können in industriellen Textilien insbesondere als Alternative zu konventionellen aus fossilen, petrochemischen Rohstoffen hergestellten Polyestern wie Polyethylenterephthalat (PET) zum Einsatz kommen. Dies beispielsweise in Förderbändern oder auch Papiermaschinenbespannungen, insbesondere Formier- und Trockensieben. Da auf fossilen Rohstoffen basierende Bestandteile erfindungsgemäß durch solche aus nachwachsenden mit exzellenten Eigenschaften ersetzt werden können, wird ein hohes Maß an Nachhaltigkeit bei gleichzeitig optimaler Qualität erzielt.

Bio-Polymere auf Basis von 2,5-Furandicarbonsäure, die im Rahmen der vorliegenden Erfindung zum Einsatz kommen, können sowohl biologisch abbaubar als auch nicht biologisch abbaubar sein.

Unter Bio-Polymeren sind insbesondere solche Polymere zu verstehen, die biobasiert oder biologisch abbaubar oder sowohl biobasiert als auch biologisch abbaubar sind.

Der Oberbegriff "Bio-Polymere" kann mit anderen Worten in zwei Gruppen unterteilt werden. Die erste Gruppe umfasst biobasierte Bio-Polymere, d. h. native Polymere oder mindestens zum Teil aus biogenen (nachwachsenden) Rohstoffen hergestellte Polymere, zu denen sowohl biologisch abbaubare Polymere als auch nicht biologisch abbaubare Polymere zählen können. Die zweite Gruppe umfasst biologisch abbaubare Bio-Polymere, zu denen sowohl biobasierte Polymere als auch petrochemisch basierte Polymere gehören können.

Bei dem oder den Bio-Polymeren, die erfindungsgemäß zum Einsatz kommen kann es sich um Bio-Kunststoffe handeln. Dies, wenn sie synthetisch hergestellt wurden.

Im Rahmen der vorliegenden Erfindung werden insbesondere Bio-Kunststoffe aus biobasierten Bio-Polymeren, bevorzugt aus biologisch abbaubaren biobasierten Bio-Polymeren verwendet.

Unter biologischer Abbaubarkeit ist vorliegend insbesondere eine aerobe biologische Abbaubarkeit zu verstehen.

Insbesondere handelt es sich um biologische Abbaubarkeit im Sinne der Norm DIN EN ISO 14851 und/oder der Norm DIN EN ISO 14852 und/oder der Norm DIN EN ISO 14855-1 und/oder der Norm DIN EN ISO 17556 zu verstehen.

Jeweils unter Punkt 3.1 dieser Normen findet sich eine Begriffserklärung bzw. Definition für aeroben biologischen Abbau. Dieser wird konkret definiert als "Zersetzung einer organischen Verbindung zu Kohlenstoffdioxid, Wasser und mineralischen Salzen jeglicher sonstiger vorliegender Elemente (Mineralisierung) sowie neuer Biomasse durch Mikroorganismen in der Gegenwart von Sauerstoff". Unter biologisch abbaubar fällt vorliegend insbesondere auch diese Art des aeroben biologischen Abbaus.

Die DIN EN ISO 14851 aus Juli 2019 betrifft u.a. die Bestimmung der vollständigen aeroben Bioabbaubarkeit von Kunststoff-Materialien in einem wässrigen Medium - Verfahren mittels Messung des Sauerstoffbedarfs in einem geschlossenen Respirometer.

Die DIN EN ISO 14852 (Dezember 2018) beschäftigt sich u.a. mit der Bestimmung der vollständigen aeroben Bioabbaubarkeit von Kunststoff-Materialien in einem wässrigen Medium -Verfahren mittels Analyse des freigesetzten Kohlenstoffdioxides.

Die DIN EN ISO 14855-1 (April 2013) betrifft u.a. die Bestimmung der vollständigen aeroben Bioabbaubarkeit von Kunst-stoff-Materialien unter den Bedingungen kontrollierter Kompostierung -Verfahren mittels Analyse des freigesetzten Kohlenstoffdioxides.

In der DIN EN ISO 14855-1 sind weiterhin unter 3.2 und 3.3 die Begriffe "Kompostierung" bzw. "Zerfall" erläutert. Demgemäß ist unter Kompostierung ein aerober Vorgang zur Erzeugung von Kompost zu verstehen. Bei Kompost handelt es sich um einen organischen Bodenzusatzstoff, der beim Bioabbau eines Gemisches entsteht, das hauptsächlich aus pflanzlichen Rückständen, gelegentlich mit sonstiger organischer Substanz vermischt, besteht und einen begrenzten Mineralgehalt aufweist. Nach Absatz 3.3 ist der Zerfall ferner die physikalische Zersetzung einer Substanz in sehr kleine Fragmente.

Die DIN EN ISO 17556 (September 2019) behandelt Kunststoffe und die Bestimmung der vollständigen aeroben Bioabbaubarkeit von Kunststoffmaterialien im Boden durch Messung des Sauerstoffbedarfs in einem Respirometer oder der Menge des entstandenen Kohlendioxids.

Eine Begriffserklärung bzw. Definition für anaeroben biologischen Abbau ist z. B. in den beiden Normen DIN EN ISO 14853 und DIN EN ISO 15985 jeweils unter Punkt 3.1 zu finden. Dort heißt es unter Der Überschrift "3.1 vollständiger anaerober Bioabbau": Zersetzung einer organischen Verbindung durch Mikroorganismen unter Ausschluss von Sauerstoff, wobei Kohlenstoffdioxid, Methan, Wasser und Mineralsalze weiterer enthaltener Elemente (Mineralisierung) sowie neue Biomasse gebildet werden.

Die DIN EN ISO 14853 (Februar 2018) betrifft Kunststoffe und die Bestimmung des vollständigen anaeroben Bioabbaus von Kunststoff-Materialien in einem wässrigen Medium - Verfahren mittels Analyse der Biogasentwicklung.

In der DIN EN ISO 14853 wird darüber hinaus unter 3.2 der primäre anaerobe biologische Abbau unterschieden. Demnach handelt es sich hierbei um eine Strukturänderung (Transformation) einer chemischen Verbindung durch Mikroorganismen, die den Verlust einer speziellen Eigenschaft bewirkt.

Die DIN EN ISO 15985 (Februar 2018) betrifft Kunststoffe und die Bestimmung des vollständigen anaeroben Bioabbaus unter anaeroben High-Solid-Aufschlussbedingungen -Verfahren mittels Analyse des freigesetzten Biogases.

Als ganz besonders geeignetes, unter Verwendung von 2,5-Furandicarbonsäure hergestelltes Bio-Polymer hat sich Polyethylenfuranoat (PEF) erwiesen. In vorteilhafter Weiterbildung ist daher vorgesehen, dass es sich bei dem oder wenigstens einem der unter Verwendung von 2,5-Furandicarbonsäure hergestellten Bio-Polymer um Polyethylenfuranoat (PEF), auch als Polyethylen-2,5-Furandicarboxylat oder Polyethylen-Furandicarboxylat oder Polyethylendicarboxyfuranoat bezeichnet, und/oder um ein Co-Polymer davon handelt.

Es sind verschiedene Möglichkeiten bekannt, 2,5-Furandicarbonsäure und auf Basis dieser ein Bio-Polymer, z.B. PEF, zu erhalten.

Beispielsweise kann aus Zucker [C₆H₁₂O₆], Glycose oder Fructose, durch Dehydrierung (- 3 H₂O) das Zwischenprodukt 5-Hydroxymethylfurfural (HMF) [C₆H₆O₃] (5-(Hydroxymethyl)-2-furaldehyd, 5-Oxymethylfurfurol, 5-(Hydroxymethyl)-furfurol(hist.)) und hieraus durch Oxidation (+ O₂) 2,5-Furandicarbonsäure (FDCA) [C₆H₄O₅] erhalten werden. Aus 2,5-Furandicarbonsäure kann, beispielsweise durch Polykondensation, unter Hinzufügung von Monoethylenglycol (MEG) [C₂H₆O₂] Polyethylenfuranoat (PEF) [[C₈H₆O₅]n] erhalten werden.

Es ist auch ein vergleichsweise energieeffizientes Polymerisationsverfahren bekannt, das insbesondere keine unerwünschten Nebenprodukte liefert und einer Einfärbung des Produktes vorbeugt. Dieses umfasst, dass durch Vorpolymerisation aus Dimethylfurandicarboxylat und Ethylenglycol Oligomere (MW < 5 kg/mol) erhalten werden. Durch Depolymerisation werden aus diesen Oligomeren und hochsiedendem Lösungsmittel cyclische Oligomere mit 2 bis Wiederholeinheiten erhalten. Durch ringöffnende Polymerisation werden durch Überführung der Ringe innerhalb von Minuten Polymere (MW > 5 kg/mol) erhalten.

Als aromatischer Polyester aus 2,5-Furandicarbonsäure (FDCA) mit Ethylenglycol (MEG) ist Polyethylenfuranoat (PEF) chemisch vergleichbar zu Polyethylenterephthalat (PET) und Polyethylennaphthalat (PEN). Es kann ein Ersatz der Terephthalsäure (PTA) bei der Herstellung herkömmlicher Polyester durch 2,5-Furandicarbonsäure (FDCA) zur Synthese von Polyethylenfuranoat (PEF) erfolgen.

Polyethylenfuranoat (PEF) weist gegenüber Polyethylenterephthalat (PET) mehrere Vorteile auf. Da es aus nachwachsenden, pflanzlichen Rohstoffen gewonnen werden kann und rezyklierbar ist, hat es eine um 50% bis 70% niedrigere Kohlenstoffbilanz als PET. Es kann unter industriellen Kompostierbedingungen abbaubar sein und zwar schneller als PET. Die Sperreigenschaften von PEF gegenüber O₂, CO₂ und H₂O sind ferner um ein Mehrfaches höher als die von PET. Was die mechanischen Eigenschaften angeht, gilt, dass PEF ein im Vergleich mit PET höheres Young-Elastizitäts-Modul E und eine höhere Zugfestigkeit aufweist. Es hat auch ein vergleichsweise geringes Gewicht und eine vergleichsweise geringe Dichte. Im Bereich der thermischen Eigenschaften zeichnet es sich durch eine höhere Glasübergangstemperatur, einen niedrigeren Schmelzpunkt und eine höhere thermische Stabilität ohne Thermofixierung aus als PET. Schließlich sind weniger Additive notwendig.

Alternativ oder zusätzlich zu PEF kommen auch Polyester und/oder Polyamid (PA) und/oder Polyurethan (PU) und/oder ein Co-Polymer hiervon in Frage. Eine weitere Ausführungsform zeichnet sich entsprechende dadurch aus, dass es sich bei dem oder wenigstens einem der aus 2,5-Furandicarbonsäure (FDCA) hergestellten Bio-Polymere um ein Polyester und/oder ein Polyamid (PA) und/oder ein Polyurethan (PU) und/oder ein Co-Polymer eines Polyesters und/oder ein Co-Polymer eines Polyamids (PA) und/oder ein Co-Polymer eines Polyurethans (PU) handelt.

In Analogie zu Polyethylenterephthalat (PET), Polytrimethylenterephthalat (PTT), Polybutylenterephthalat (PBT) kommen auch Polyester mit längeren Ketten zwischen den Furanoaten als FDCA-basierte Bio-Polymere in Frage.

Besonders bevorzugt handelt es sich bei dem wenigstens einen unter Verwendung von 2,5-Furandicarbonsäure hergestellten Bio-Polymer, das erfindungsgemäß zum Einsatz kommt, ferner um ein 100% biobasiertes Bio-Polymer, beispielsweise um 100% biobasiertes PEF. Gemäß DIN EN 17228 - Juni 2019 (Kunststoffe - Biobasierte Polymere, Kunststoffe und Kunststoffprodukte - Begriffe, Merkmale und Kommunikation), Abschnitt 3.2, ist ein biobasiertes Polymer ein Polymer, das vollständig oder teilweise von Biomasse abgeleitet ist, wobei unter Punkt 3.8 Biomasse als Material biologischen Ursprungs mit Ausnahme von Material aus fossilen und/oder geologischen Quellen definiert ist.

Bei der 2,5-Furandicarbonsäure handelt es sich bevorzugt um eine solche, die aus dem Einfachzucker (Monosaccharid) eines oder mehrerer nachwachsender, insbesondere pflanzlicher Rohstoffe, bevorzugt Mais, Weizen, Kartoffeln oder Tapioka, hergestellt wurde.

Das erfindungsgemäße industrielle Textil kann Monofilamente umfassen. Dann hat es sich als ganz besonders vorteilhaft erweisen, wenn ein Teil oder alle Monofilamente teilweise oder ganz aus wenigstens einem aus 2,5-Furandicarbonsäure hergestellten Bio-Polymer bestehen. Bei konventionellen industriellen Textilien bestehen Monofilamente in der Regel aus Polymeren, z. B. Polyestern wie Polyethylenterephthalat (PET), die aus konventionellen, fossilen, petrochemischen Rohstoffen hergestellt wurden. Gemäß dieser Ausführungsform können einer oder mehrere aus 2,5-Furandicarbonsäure hergestellte Bio-Polymere in industriellen Textilien als Alternative zu solchen konventionellen Polymeren zum Einsatz kommen und zwar ganz besonders bevorzugt ausgesponnen in Form von Monofilamenten z.B. für Gewebe und/oder Gelege und/oder Gewirke und/oder Spiralgliederbänder etc.

Es ist auch möglich, dass das erfindungsgemäße industrielle Textil Fasern und/oder Fäden in Form von Monofilamenten bzw. Monofilament-Zwirnen und/oder Multifilamenten bzw. Multifilament-Zwirnen und/oder Spinnfasergarnen und/oder Multikomponenten-Fäden umfasst. Dann gilt weiter bevorzugt, dass ein Teil oder alle Fasern und/oder ein Teil oder alle Fäden teilweise oder ganz aus wenigstens einem unter Verwendung von 2,5-Furandicarbonsäure hergestellten Bio-Polymer bestehen.

Eine weitere Ausführungsform zeichnet sich dadurch aus, dass das industrielle Textil ein Fadensystem mit Fäden aufweist oder daraus besteht. Dann gilt bevorzugt, dass ein Teil der Fäden oder sämtliche Fäden teilweise oder ganz aus wenigstes einem unter Verwendung von 2,5-Furandicarbonsäure hergestellten Bio-Polymer bestehen.

Ist ein Fadensystem vorhanden, kann dieses eines oder mehrere Gewebe, Gewirke, Fadengelege, Spiralgliederbänder und/oder Kombinationen davon bilden. Dann kann ein Teil oder können alle Fäden des Fadensystems als Monofilamente bzw. Monofilament-Zwirne und/oder Multifilamente bzw. Multifilament-Zwirne und/oder Spinnfasergarne und/oder Multikomponenten-Fäden ausgebildet sein. Bevorzugt gilt dann, dass ein Teil oder alle als Monofilamente bzw. Monofilament-Zwirne und/oder Multifilamente bzw. Multifilament-Zwirne und/oder Spinnfasergarne und/oder Multikomponenten-Fäden ausgebildete Fäden teilweise oder ganz aus wenigstens einem unter Verwendung von 2,5-Furandicarbonsäure hergestellten Bio-Polymer bestehen.

Ein Fadensystem kann auch mehrere Lagen aufweisen und dann kann zumindest eine Lage Fäden enthalten oder aus Fäden bestehen, die teilweise oder ganz aus wenigstens einem unter Verwendung von 2,5-Furandicarbonsäure hergestellten Bio-Polymer bestehen.

Eine weitere Ausführungsform zeichnet sich dadurch aus, dass das industrielle Textil mit einer Beschichtung versehen ist, bevorzugt, wobei die Beschichtung teilweise oder ganz aus wenigstens einem unter Verwendung von 2,5-Furandicarbonsäure hergestellten Bio-Polymer besteht.

Das industrielle Textil kann auch mit einer Faserschicht versehen sein. Dann kann die Faserschicht teilweise oder ganz aus wenigstens einem unter Verwendung von 2,5-Furandicarbonsäure hergestellten Bio-Polymer bestehen.

Das wenigstens eine erfindungsgemäß vorgesehene Bio-Polymer hat sich mit anderen Worten auch für Beschichtungen und/oder für Faservliese industrieller Textilien als geeignet erwiesen.

Es ist möglich, dass das industrielle Textil vollständig aus einem oder mehreren unter Verwendung von 2,5-Furandicarbonsäure hergestellten Bio-Polymer besteht. Alternativ dazu kann es auch eines oder mehrere solche Bio-Polymere und zusätzlich weitere Materialien umfassen, sowohl solche, die ebenfalls aus nachwachsenden, insbesondere pflanzlichen Rohstoffen gewonnen wurden, als auch solche aus fossilen Rohstoffen. Beispielsweise kann das wenigstens eine Bio-Polymer auch mit konventionellen, mineralölbasierten Kunststoffen kombiniert und/oder vermischt werden kann, z.B. unter Bildung von Compounds und/oder Blends.

Als besonders geeignet hat es sich erweisen, wenn das industrielle Textil zu mindestens 50 Gew.-%, insbesondere zu mindestens 70 Gew.-%, bevorzugt zu mindestens 90 Gew.-%, besonders bevorzugt zu 100 Gew.-% unter Verwendung von wenigstens einem aus 2,5-Furandicarbonsäure hergestellten Bio-Polymer besteht.

Sollte das erfindungsgemäße industrielle Textil nicht komplett aus dem FDCA-basierten Bio-Polymer bestehen, so kann der andere, bevorzugt geringere, Polymer-Anteil
- ein biologisch abbaubares natives bzw. biobasiertes Bio-Polymer (Stärke und/oder Cellulose und/oder Lignin und/oder Chitin und/oder Chitosan und/oder Polylactidsäure (PLA) und/oder Polyhydroxyalkanoat (PHA) und/oder Polybutylensuccinat (PBS) und/oder Polyethylen-co-isosorbid-terephthalatpolymer (PEIT) und/oder Copolymere)
   und/oder
- ein nicht biologisch abbaubares biobasiertes Bio-Polymer (Polyamid 6.10 unter Verwendung biobasierter Sebacinsäure) und/oder
- ein biologisch abbaubares petrochemisch basiertes Bio-Polymer und/oder
- ein nicht biologisch abbaubares petrochemisch basiertes Polymer (Polyamid (PA) und/oder Polyester - wie z. B. Polybutylenterephthalat (PBT) und/oder Polytrimethylenterephthalat (PTT) und/oder Polyethylenterephthalat (PET) und/oder Polyethylennaphthalat (PEN) - und/oder Polyethylen (PE) und/oder Polyvinylchlorid (PVC) und/oder Polyphenylensulfid (PPS) und/oder Polyurethan (PU) und/oder Copolymere) umfassen oder dadurch gegeben sein.

Weiter bevorzugt gilt, dass das industrielle Textil als Formier- oder Trockensieb für eine Papiermaschine ausgebildet ist. Der bevorzugte Einsatz des FDCA-basierten Bio-Polymers in Formier- oder Trockensieben beruht auf der chemischen Ähnlichkeit des Bio-Polymers PEF mit dem herkömmlichen Polyester PET, welches bislang in konventionellen Formier- und Trockensieben bevorzugt eingesetzt wird. Aufgrund des ähnlichen chemischen Aufbaus des PEF resultieren die mit PET vergleichbar guten mechanischen Eigenschaften des PEF, wie insbesondere der hohe E-Modul. Der Vorteil liegt dann primär in der Verwendung eines Bio-Polymers, welches aus nachwachsenden Rohstoffen, d. h. nachhaltig, hergestellt werden kann.

Alternativ kann es sich bei dem erfindungsgemäßen industriellen Textil auch um einen Pressenfilz, ein Transferbelt oder einen Träger für eine Papiermaschinenbespannung handeln. Auch kann vorgesehen sein, dass sonstige Prozess- oder Transportbänder erfindungsgemäß ausgebildet sind.

Gegenstand der Erfindung ist auch die Verwendung wenigstens eines auf Basis von 2,5-Furandicarbonsäure hergestellten Bio-Polymers zur Herstellung eines industriellen Textils, insbesondere einer Papiermaschinenbespannung oder eines Prozess- oder Transportbandes. Im Falle der Papiermaschinenbespannung handelt es sich besonders bevorzugt um ein Formier- oder Trockensieb.

Hinsichtlich der Ausgestaltungen der Erfindung wird auch auf die Unteransprüche sowie auf die nachfolgende Beschreibung von Ausführungsbeispielen unter Bezugnahme auf die beiliegende Zeichnung verwiesen.

In der Zeichnung zeigt:
- Figur 1: ein erstes Ausführungsbeispiel eines erfindungsgemäßen industriellen Textils, das als Formiersieb ausgestaltet ist, in rein schematischer Schnittdarstellung;
- Figur 2: ein zweites Ausführungsbeispiel eines erfindungsgemäßen industriellen Textils, das als Pressenfilz ausgestaltet ist, in rein schematischer perspektivischer Explosionsdarstellung;
- Figur 3: ein drittes Ausführungsbeispiel eines erfindungsgemäßen industriellen Textils, das als Trockensieb oder Transportband oder als Träger, z.B. für eine Papiermaschinenbespannung oder ein Transportband, ausgestaltet ist, in rein schematischer Schnittdarstellung;
- Figur 4: ein viertes Ausführungsbeispiel eines erfindungsgemäßen industriellen Textils, das als Trockensieb oder Transportband oder als Träger, z.B. für eine Papiermaschinenbespannung oder ein Transportband, ausgestaltet ist, in rein schematischer Aufsicht; und
- Figur 5: ein fünftes Ausführungsbeispiel eines industriellen Textils, das als Träger, z.B. für eine Papiermaschinenbespannung oder ein Transportband, ausgebildet ist, in rein schematischer Aufsicht.

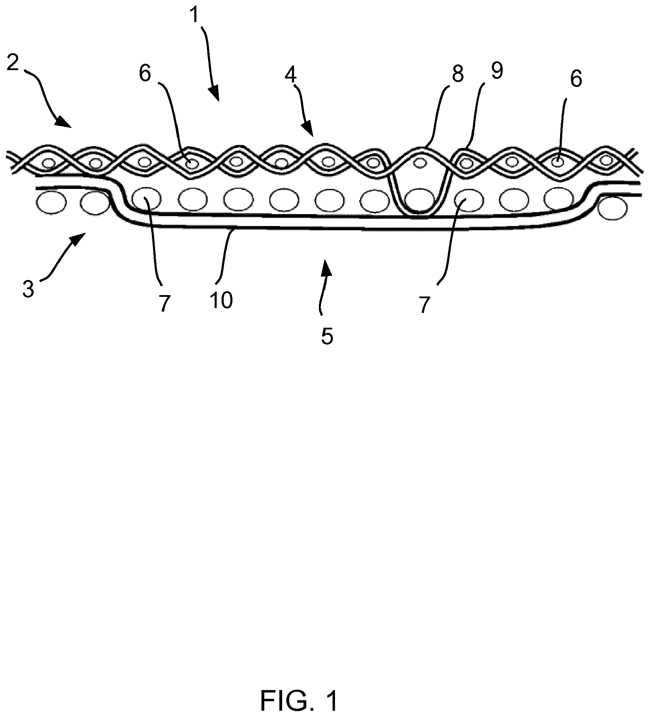

Die Figur 1 bis 5 zeigen mehrere Ausführungsbeispiele erfindungsgemäßer industrieller Textilien in rein schematischer Darstellung, wobei in jeder Figur nur ein Abschnitt des jeweiligen Textils gezeigt ist. In den Figuren sind gleiche bzw. korrespondierende Komponenten jeweils mit gleichen Bezugszeichen versehen.

Alle fünf Ausführungsbeispiele haben gemeinsam, dass sie teilweise oder ganz aus wenigstens einem aus 2,5-Furandicarbonsäure hergestellten Bio-Polymer bestehen. Bevorzugt gilt dabei, dass das wenigstens eine Bio-Polymer 100% biobasiert und biologisch abbaubar ist.

Die Figur 1 zeigt ein als Papiermaschinenbespannung 1 ausgebildetes industrielles Textil mit einer ersten Gewebelage 2 und einer zweiten Gewebelage 3. Die beiden Gewebelagen 2, 3 sind übereinandergelegt. Die Außenseite der ersten Gewebelage 2 bildet die Papierseite 4 und die Außenseite der zweiten Gewebelage 3 bildet die Maschinenseite 5 der Papiermaschinenbespannung 1. Die beiden Gewebelagen umfassen in vorbekannter Weise Längsfäden 6, 7 die sich in der vorgesehenen Laufrichtung der Papiermaschinenbespannung 1 erstrecken und Kettfäden bilden, sowie Querfäden - z.B. mit 8, 9, 10 bezeichnet -, die sich quer dazu erstrecken. Man kann auch sagen, dass die Papiermaschinenbespannung 1 als mehrlagiges Flachgewebe mit einer papierseitigen und einer maschinenseitigen Gewebelage 2, 3, die über intrinsische papierseitige Einzel-Bindefäden 9 verbunden sind, ausgebildet ist.

Es kann beispielsweise sein, dass ein Teil oder alle Längsfäden 6 und/oder ein Teil oder alle Längsfäden 7 und/oder ein Teil oder alle Querfäden 8 und/oder ein Teil oder alle Querfäden 9 und/oder ein Teil oder alle Querfäden 10 jeweils teilweise oder ganz aus wenigstens einem aus 2,5-Furandicarbonsäure hergestellten Bio-Polymer bestehen. Als ganz besonders geeignetes Bio-Polymer hat sich dabei Polyethylenfuranoat (PEF) erwiesen, das zu Monofilamenten ausgesponnen ist.

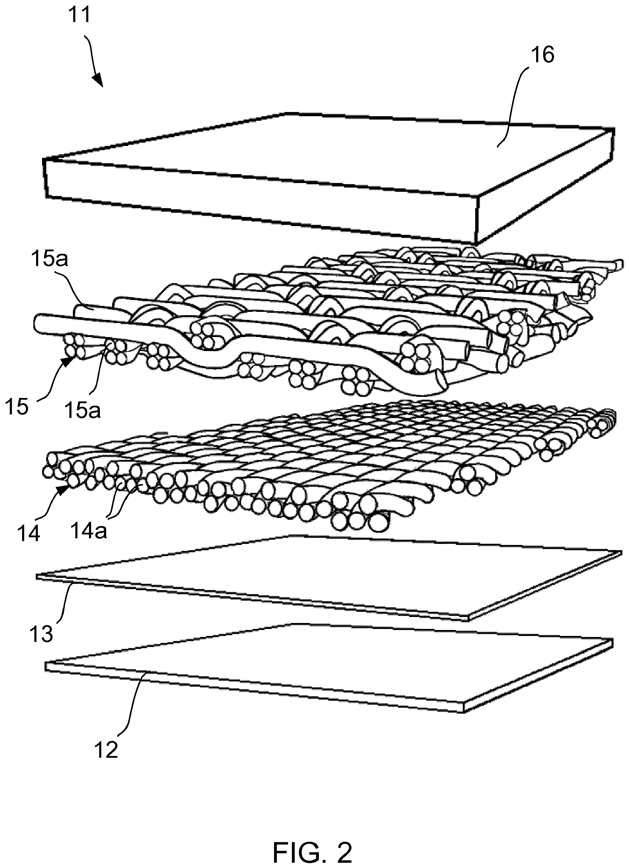

Die Figur 2 zeigt einen Abschnitt eines zweiten Ausführungsbeispiels eines erfindungsgemäßen industriellen Textils, das als Pressenfilz für eine Papiermaschine ausgebildet ist. Dieser ist beispielsweise besonders für die Herstellung grafischer Papiere und im Tissue-Bereich zur Entwässerung einer Papierbahn geeignet. Der Pressenfilz 11 umfasst ein Trägervlies 12, ein auf der Papierseite des Trägervlieses 12 vorgesehenes und mit ihm über eine Schmelzfaser-Klebeschicht 13 verbundenes Fadengelege 14, einen auf der Papierseite des Fadengeleges 14 vorgesehenen Träger 15 in Form eines Träger-Gewebes, und ein auf der Papierseite des Trägers 15 vorgesehenes kardiertes Spinnfaservlies 16. Die in dieser Weise übereinander geschichteten Pressenfilzlagen sind miteinander durch Vernadeln verbunden.

Bei diesem Ausführungsbeispiel gilt, dass eine oder mehrere oder auch alle der Lagen 12-16 des Pressenfilzes 11 jeweils teilweise oder ganz aus wenigstens einem unter Verwendung von 2,5-Furandicarbonsäure hergestellten Bio-Polymer, insbesondere einem 2,5-Furandicarbonsäure-basierten Polyamid, bestehen können. So kann es beispielsweise sein, dass alle oder ein Teil der Fäden 14a des Fadengeleges 14 und/oder alle oder ein Teil der Fäden 15a des Trägers 15 aus einem solchen Bio-Polymer bestehen.

In gleicher Weise können das Trägervlies 12 und/oder die Schmelzfaser-Klebeschicht 13 und/oder das Spinnfaservlies 16 jeweils anteilig oder auch ganz aus einem solchen Bio-Polymer gefertigt sein.

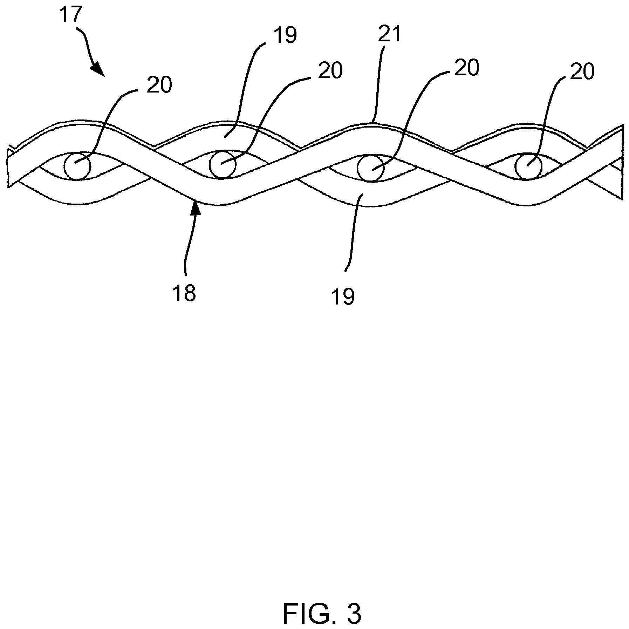

Die Figur 3 zeigt einen Längsschnitt durch einen Abschnitt eines dritten Ausführungsbeispiels eines erfindungsgemäßen industriellen Textils 17, das als Trockensieb für eine Papiermaschine ausgebildet ist. Dieses umfasst ein als Gewebe ausgebildetes Fadensystem 18 mit Längsfäden 19 und Querfäden 20. Wie man sieht, handelt es sich um ein einlagiges Flachgewebe in Leinwandbindung. Das Gewebe ist maschinenseitig mit einer Beschichtung 21 versehen.

Bei diesem Ausführungsbeispiel kann ein Teil oder können alle Längsfäden 19 und/oder kann ein Teil oder können alle Querfäden 20 jeweils teilweise oder ganz aus wenigstens einem unter Verwendung von 2,5-Furandicarbonsäure hergestellten Bio-Polymer, insbesondere PEF, bestehen. Alternativ oder zusätzlich kann die Beschichtung 21 teilweise oder ganz aus wenigstens einem solchen Bio-Polymer gefertigt sein.

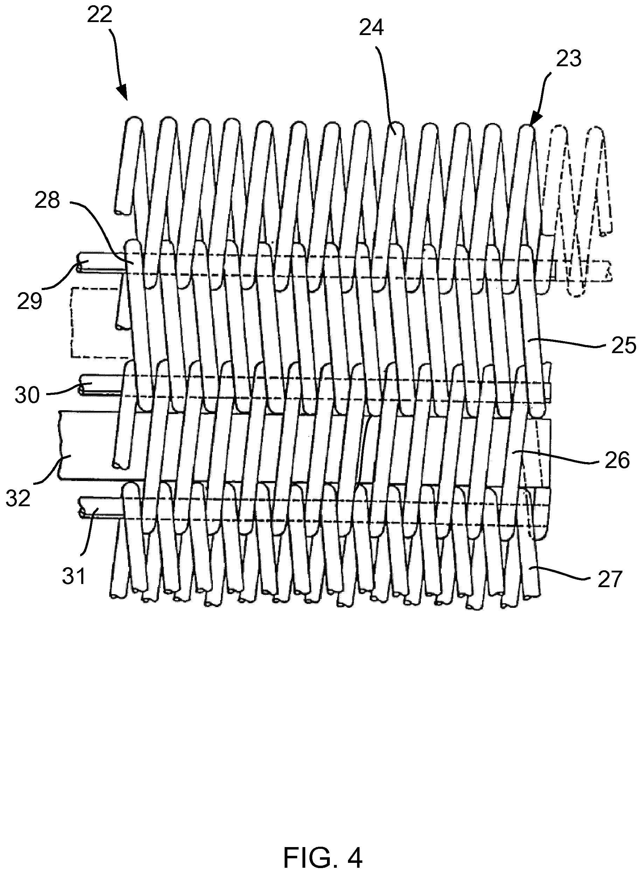

Die Figur 4 zeigt ein weiteres Ausführungsbeispiel eines industriellen Textils 22, das als Trockensieb oder als Transportband ausgebildet ist oder auch einen Träger für eine Papiermaschinebespannung oder ein Transport- oder anderweitiges Prozessband bildet.

Das Textil 22 umfass ein Spiralgliederband 23 mit einer Vielzahl von flachen Wendeln 24, 25, 26, 27, die sich quer zur vorgesehenen Laufrichtung des Trockensiebs bzw. Transportbandes von Rand zu Rand erstrecken. Mit ihren Kopfbögen - beispielhaft mit 28 bezeichnet - überlappen sie sich gegenseitig derart, dass hierdurch jeweils Kanäle für das Einführen von Kupplungsdrähten 29, 30, 31 gebildet werden, über die die einzelnen Wendeln 24, 25, 26, 27 scharnierartig miteinander gekuppelt sind.

In die von den geraden Windungsschenkeln der Wendeln 24, 25, 26, 27 gebildeten Hohlräume sind flache Fülldrähte 32 eingeschoben, von denen hier nur einer eingezeichnet ist. Mit diesen Fülldrähten 32 lässt sich die Durchlässigkeit des Spiralgliederbandes 23 entsprechend dem jeweiligen Anwendungszweck einstellen. Sie können auch weggelassen werden.

Das Spiralgliederband 23 besteht teilweise oder ganz aus wenigstens einem aus 2,5-Furandicarbonsäure hergestellten Bio-Polymer, insbesondere PEF. Dabei können ein Teil oder alle der Wendeln 24, 25, 26, 27 und/oder ein Teil oder alle der Kupplungsdrähte 29, 30, 31 und/oder ein Teil oder alle der eventuell vorhandenen Fülldrähte 32 das 2,5-Furandicarbonsäure-basierte Bio-Polymer umfassen oder daraus bestehen.

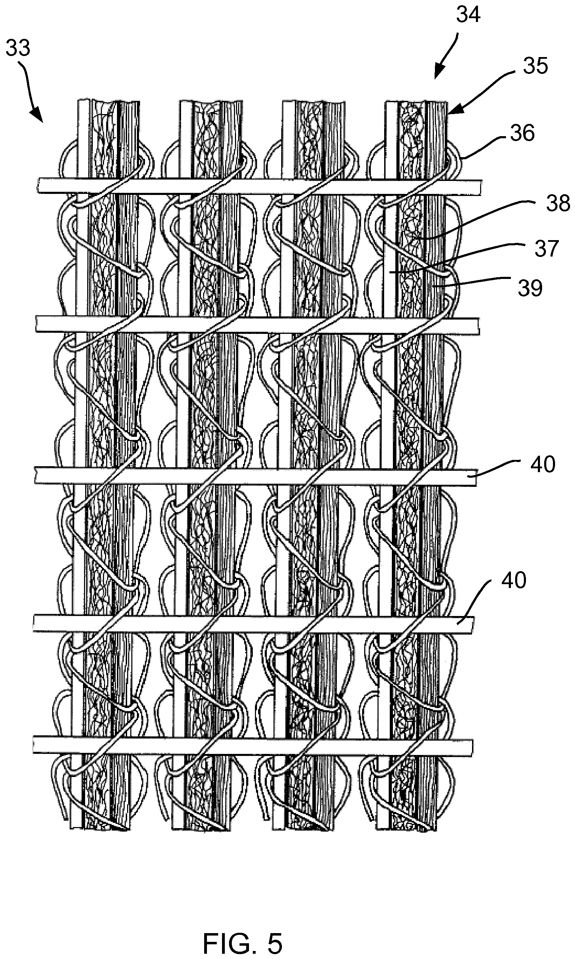

Schließlich zeigt die Figur 5 ein fünftes Ausführungsbeispiel eines erfindungsgemäßen industriellen Textils 33, das insbesondere eine Papiermaschinenbespannung oder auch einen Träger für eine Papiermaschinenbespannung oder für ein Prozess-, oder Transportband, bilden kann.

Das Textil 33 umfasst Längsfäden 34, die als Multikomponenten-Fäden 35 ausgebildete Stehfäden und die Multikomponenten-Fäden 35 umschließende, insbesondere kettengewirkte Maschenfäden 36 umfassen. Jeder Multikomponenten-Faden 35 der Stehfäden der Längsfäden 34 enthält vorliegend drei Einzelfäden, die in der schematischen Figur beispielhaft mit 37, 38 und 39 bezeichnet sind. Bei den Einzelfäden 37, 38, 39 handelt es sich vorliegend um Monofilamente 37, Spinnfasergarne 38 und Multifilamente 39, wobei dies nur beispielhaft zu verstehen ist. Die Maschenfäden 36 der Längsfäden 34 sind aus Monofilamenten gebildet. Neben den Längsfäden 34 genannten Aufbaus umfasst das Textil 33 ferner Querfäden 40, welche durch Magazinschussfäden aus Monofilamenten bereitgestellt werden.

Auch bei dem fünften Ausführungsbeispiel gilt, dass ein Teil oder auch alle der Fäden 34, 40 jeweils teilweise oder ganz aus wenigstens einem unter Verwendung von 2,5-Furandicarbonsäure hergestellten Bio-Polymer, insbesondere PEF, bestehen.

Es sei angemerkt, dass, auch wenn die Figur 5 nur eine Lage zeigt, es selbstverständlich möglich ist, dass neben dieser noch weitere - gleich oder anders gestaltete - Lagen vorhanden sind, wobei die mehreren Lagen dann mechanisch bevorzugt durch Vernadeln oder stoffschlüssig durch Verkleben, Verschweißen oder Verschmelzen miteinander verbunden sind.

Weiterhin sei angemerkt, dass es besonders nachhaltig ist, wenn das industrielle Textil 1, 11, 17, 22, 33 zu einem möglichst großen Teil aus insbesondere 100% biobasiertem unter Verwendung von 2,5-Furandicarbonsäure hergestelltem Bio-Polymer besteht. Als besonders geeignet hat sich erwiesen, wenn das industrielle Textil 1, 11, 17, 22, 33 zu mindestens 50 Gew.-%, insbesondere zu mindestens 70 Gew.-%, bevorzugt zu mindestens 90 Gew.-%, besonders bevorzugt zu 100 Gew.-% aus wenigstens einem unter Verwendung von 2,5-Furandicarbonsäure hergestellten Bio-Polymer besteht.

Sollte das industrielle Textil nicht komplett aus dem FDCA-basierten Bio-Polymer bestehen, so kann der andere, bevorzugt geringere, Polymer-Anteil
- ein biologisch abbaubares natives bzw. biobasiertes Bio-Polymer (Stärke und/oder Cellulose und/oder Lignin und/oder Chitin und/oder Chitosan und/oder Polylactidsäure (PLA) und/oder Polyhydroxyalkanoat (PHA) und/oder Polybutylensuccinat (PBS) und/oder Polyethylen-co-isosorbid-terephthalatpolymer (PEIT) und/oder Copolymere)
   und/oder
- ein nicht biologisch abbaubares biobasiertes Bio-Polymer (Polyamid 6.10 unter Verwendung biobasierter Sebacinsäure)
   und/oder
- ein biologisch abbaubares petrochemisch basiertes Bio-Polymer und/oder
- ein nicht biologisch abbaubares petrochemisch basiertes Polymer (Polyamid (PA) und/oder Polyester - wie z. B. Polybutylenterephthalat (PBT) und/oder Polytrimethylenterephthalat (PTT) und/oder Polyethylenterephthalat (PET) und/oder Polyethylennaphthalat (PEN) - und/oder Polyethylen (PE) und/oder Polyvinylchlorid (PVC) und/oder Polyphenylensulfid (PPS) und/oder Polyurethan (PU) und/oder Copolymere) umfassen oder dadurch gegeben sein.

Durch die Nutzung von auf Basis von 2,5-Furandicarbonsäure hergestelltem Bio-Polymer für die industriellen Textilien 1, 11, 17, 22, 33 können besonders nachhaltige Produkte erhalten werden. Da aus 2,5-Furandicarbonsäure sehr hochwertige Bio-Polymere erhältlich sind, die sich durch hervorragende thermische sowie mechanische Eigenschaften auszeichnen, weisen auch die daraus erhaltenen Produkte eine exzellente Qualität auf.

## Patentansprüche

1. Industrielles Textil (1, 11, 17, 22, 33), insbesondere Papiermaschinenbespannung, Prozess- oder Transportband, das teilweise oder ganz aus wenigstens einem unter Verwendung von 2,5-Furandicarbonsäure hergestellten Bio-Polymer besteht.

2. Industrielles Textil (1, 11, 17, 22, 33) nach Anspruch 1, **dadurch gekennzeichnet, dass** es sich bei dem oder wenigstens einem der aus 2,5-Furandicarbonsäure hergestellten Bio-Polymere um ein Polyamid und/oder ein Polyester und/oder ein Polyurethan und/oder ein Co-Polymer eines Polyamids und/oder ein Co-Polymer eines Polyesters und/oder ein Co-Polymer eines Polyurethans handelt.

3. Industrielles Textil (1, 11, 17, 22, 33) nach Anspruch 1, **dadurch gekennzeichnet, dass** es sich bei dem oder wenigstens einem der aus 2,5-Furandicarbonsäure hergestellten Bio-Polymere um Polyethylenfuranoat und/oder um ein Co-Polymer davon handelt.

4. Industrielles Textil (1, 11, 17, 22, 33) nach einem der vorhergehenden Ansprüche, **dadurch gekennzeichnet, dass** es sich bei der 2,5-Furandicarbonsäure um eine solche handelt, die aus dem Einfachzucker eines oder mehrere nachwachsender, insbesondere pflanzlicher Rohstoffe, bevorzugt Mais, hergestellt wurde.

5. Industrielles Textil (1, 11, 17, 22, 33) nach einem der vorhergehenden Ansprüche, **dadurch gekennzeichnet, dass** das industrielle Textil (1, 11, 17, 22, 33) Fasern (12, 13, 16) und/oder Fäden (6-10, 14a, 15a, 19, 20, 24-27, 29-32, 34-40), insbesondere in Form von Monofilamenten (6-10, 19-20, 24-27, 29-32, 36-37, 40) bzw. Monofilament-Zwirnen (14-15) und/oder Multifilamenten (39) bzw. Multifilament-Zwirnen und/oder Stapelfasergarnen (38) und/oder Multikomponenten-Fäden (35), umfasst, bevorzugt, wobei ein Teil oder alle Fasern und/oder ein Teil oder alle Fäden (6-10, 14a, 15a, 19-20, 24-27, 29-32, 34-40) teilweise oder ganz aus wenigstens einem unter Verwendung von 2,5-Furandicarbonsäure hergestellten Bio-Polymer bestehen.

6. Industrielles Textil (1, 11, 17, 22, 33) nach einem der vorhergehenden Ansprüche, **dadurch gekennzeichnet, dass** das industrielle Textil (1, 11, 17, 22, 33) ein Fadensystem mit Fäden (6-10, 14a, 15a, 19-20, 24-27, 29-32, 34-40) aufweist oder daraus besteht, bevorzugt, wobei ein Teil der Fäden (6-10, 14a, 15a, 19-20, 24-27, 29-32, 34-40) oder sämtliche Fäden (6-10, 14a, 15a, 19-20, 24-27, 29-32, 34-40) teilweise oder ganz aus wenigstes einem unter Verwendung von 2,5-Furandicarbonsäure hergestellten Bio-Polymer bestehen.

7. Industrielles Textil (1, 11, 17, 22, 33) nach Anspruch 6, **dadurch gekennzeichnet, dass** das Fadensystem eines oder mehrere Gewebe (2, 3, 15, 18), Gewirke (33), Fadengelege (14) oder Spiralgliederbänder (23) und/oder Kombinationen davon bildet.

8. Industrielles Textil (1, 11, 17, 22, 33) nach Anspruch 6 oder 7, **dadurch gekennzeichnet, dass** ein Teil oder alle Fäden des Fadensystems als Monofilamente (6-10, 19-20, 24-27, 29-32, 36-37, 40) und/oder Monofilament-Zwirne (14-15) und/oder Multifilamente (39) und/oder Multifilament-Zwirne und/oder Spinnfasergarne (38) und/oder Multikomponenten-Fäden (35) ausgebildet sind, bevorzugt, wobei ein Teil oder alle als Monofilamente (6-10, 19-20, 24-27, 29-32, 36-37, 40) und/oder Monofilament-Zwirne (14-15) und/oder Multifilamente (39) und/oder Multifilament-Zwirne und/oder Spinnfasergarne (38) und/oder Multikomponenten-Fäden (35) ausgebildete Fäden teilweise oder ganz aus wenigstens einem unter Verwendung von 2,5-Furandicarbonsäure hergestellten Bio-Polymer bestehen.

9. Industrielles Textil (1, 11, 17, 22, 33) nach einem der Ansprüche 6 bis 8, **dadurch gekennzeichnet, dass** das Fadensystem mehrere Lagen (2, 3, 14, 15) aufweist und dass zumindest eine Lage Fäden (6-10, 14a, 15a, 19-20, 24-27, 29-32, 34-40) enthält oder daraus besteht, die teilweise oder ganz aus wenigstens einem unter Verwendung von 2,5-Furandicarbonsäure hergestellten Bio-Polymer bestehen.

10. Industrielles Textil (1, 11, 17, 22, 33) nach einem der vorhergehenden Ansprüche, **dadurch gekennzeichnet, dass** das industrielle Textil (1, 11, 17, 22, 33) mit einer Beschichtung (21) versehen ist, bevorzugt, wobei die Beschichtung (21) teilweise oder ganz aus wenigstens einem unter Verwendung von 2,5-Furandicarbonsäure hergestellten Bio-Polymer besteht.

11. Industrielles Textil (1, 11, 17, 22, 33) nach einem der vorhergehenden Ansprüche, **dadurch gekennzeichnet, dass** das industrielle Textil (1, 11, 17, 22, 33) mit einer Faserschicht (12, 13, 16) versehen ist, bevorzugt, wobei die Faserschicht teilweise oder ganz aus wenigstens einem unter Verwendung von 2,5-Furandicarbonsäure hergestellten Bio-Polymer besteht.

12. Industrielles Textil (1, 11, 17, 22, 33) nach einem der vorhergehenden Ansprüche, **dadurch gekennzeichnet, dass** das industrielle Textil (1, 11, 17, 22, 33) zu mindestens 50 Gew.-%, insbesondere zu mindestens 70 Gew.-%, bevorzugt zu mindestens 90 Gew.-% aus wenigstens einem unter Verwendung von 2,5-Furandicarbonsäure hergestellten Bio-Polymer besteht.

13. Industrielles Textil (1, 11, 17, 22, 33) nach einem der vorhergehenden Ansprüche, **dadurch gekennzeichnet, dass** das industrielle Textil (1, 11, 17, 22, 33) als Formiersieb, Pressenfilz, Transferbelt oder Trockensieb für eine Papiermaschine ausgebildet ist.

14. Verwendung wenigstens eines aus 2,5-Furandicarbonsäure hergestellten Bio-Polymers zur Herstellung eines industriellen Textils (1, 11, 17, 22, 33), insbesondere einer Papiermaschinenbespannung oder eines Prozess- oder Transportbandes bevorzugt für die Lebensmittel- oder Holzindustrie.
